# EUROPEAN PATENT APPLICATION

(11) **EP 1 873 353 A2**
(43) Date of publication of application: **02.01.2008**
(21) Application number: 07252606.4
(22) Date of filing: 27.06.2007
(51) Int. Cl.: F01D 5/00, F01D 5/18

(54) **High coverage cooling hole shape**

(30) Priority: 29.06.2006 US 477293
(71) Applicant: United Technologies Corporation, Hartford, CT 06101 (US)
(72) Inventor: Kohli, Atul, Tolland, CT 06084 (US); Doll, Stephen D., Portland, CT 06480 (US); Staubach, Joseph B., Colchester, CT 06415 (US)
(74) Representative: Leckey, David Herbert

(57) **Abstract**

A cooling hole (50) for a gas turbine engine component (32) has a bi-lobed shape to improve cooling effectiveness. The gas turbine engine component has a first outer surface (52) and a second outer surface (54) separated from each other by a thickness. The cooling hole (50) extends through the thickness from a first opening (56) at the first outer surface (52) to a second opening (58) at the second outer surface (54). The first and second openings (56,58) are defined by shapes that are different from each other. One of the first and second openings (56,58) has the bi-lobed shape.

## Description

### BACKGROUND OF THE INVENTION

This application relates a cooling hole formed within a gas turbine engine component, such as a turbine blade for example, where the cooling hole is shaped to improve cooling effectiveness.

Gas turbine engines include many different types of components that are subjected to high thermal stresses. One example of such a component is a turbine blade. As known, a turbine blade typically includes a platform, with an airfoil body extending above the platform. The airfoil body is curved, extending from a leading edge to a trailing edge. Moreover, there is a pressure side and a suction side to the airfoil body. The pressure side becomes much hotter than the suction side during operation.

Cooling channels or holes are formed within the airfoil body to circulate cooling air. A cooling hole extends from a first surface of the airfoil body, through a thickness of the airfoil body, and is open to a second surface of the airfoil body. One traditional type of cooling hole has a circular cross-section extending from the first surface to the second surface.

A known improvement to this traditionally shaped cooling hole is a hole that has a trapezoidal shape at one of the first and second surfaces. This shape provides improved cooling but is difficult and time consuming to manufacture. Further, while this trapezoidal shape provides improved cooling, there is a need for even greater cooling capability for components in a gas turbine engine that are subjected to thermal stresses.

Thus, there is a need for an improved cooling hole shape that provides more effective cooling, and which can be easily manufactured.

### SUMMARY OF THE INVENTION

In a disclosed embodiment of this invention, a cooling hole is formed within a component for a gas turbine engine. The component has a first outer surface and a second outer surface separated from each other by a thickness. The cooling hole extends through the thickness from a first opening at the first outer surface to a second opening at the second outer surface. At least one of the first and second openings has a bi-lobed shape.

In one disclosed embodiment, the first and second openings are defined by shapes that are different from each other. In one example, one of the first and second openings has the bi-lobed shape and the other of the first and second openings has a circular shape.

In one disclosed embodiment, parameters defining the bi-lobed shape are varied to optimize dimensions for the bi-lobed shape. In one example, a plurality of radii are used to define the bi-lobed shape, and the radii values are varied to optimize cooling for an associated component.

The bi-lobed shape of the cooling hole improves cooling effectiveness and can be easily formed within a component by rapid electrical discharge machining (EDM), laser drilling, or other similar processes. These and other features of the present invention can be best understood from the following specification and drawings, the following of which is a brief description.

### BRIEF DESCRIPTION OF THE DRAWINGS

Figure 1 is a schematic of a gas turbine engine incorporating the present invention.
Figure 2A is a view of a single turbine blade.
Figure 2B is a cross-section of an airfoil of the turbine blade of Figure 2A.
Figure 3 is an example of a cooling hole formed within a gas turbine engine component.
Figure 4 is an end view of the cooling hole of Figure 3.
Figure 5A is a top view of the cooling hole of Figure 4.
Figure 5B is an end view of the cooling hole of Figure 5A.
Figure 5C is a bottom view of the cooling hole of Figure 5A.
Figure 6 is a flowchart defining a method for optimizing a shape of the cooling hole.

### DETAILED DESCRIPTION OF THE PREFERRED EMBODIMENT

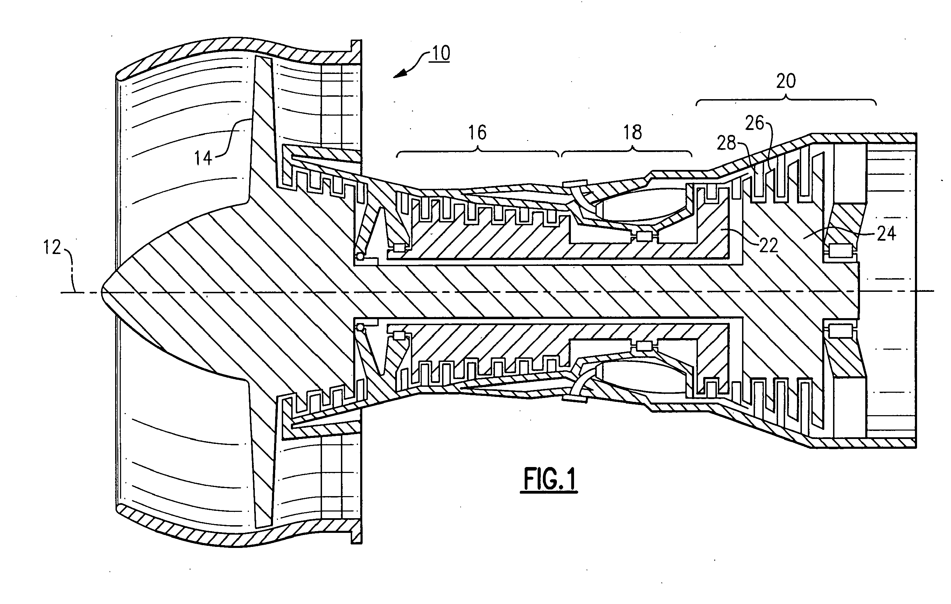

Figure 1 shows a gas turbine engine 10, such as a gas turbine used for power generation or propulsion, circumferentially disposed about an engine centerline, or axial centerline axis 12. The engine 10 includes a fan 14, a compressor 16, a combustion section 18 and a turbine 20. As is well known in the art, air compressed in the compressor 16 is mixed with fuel which is burned in the combustion section 18 and expanded in turbine 20. The air compressed in the compressor 16 and the fuel mixture expanded in the turbine 20 can both be referred to as a hot gas stream flow. The turbine 20 includes rotors 22 and 24 that, in response to the expansion, rotate, driving the compressor 16 and fan 14. The turbine 20 comprises alternating rows of rotary blades 26 and static airfoils or vanes 28. Figure 1 is a somewhat schematic representation, for illustrative purposes only, and is not a limitation of the instant invention, that may be employed on gas turbines used for electrical power generation and aircraft.

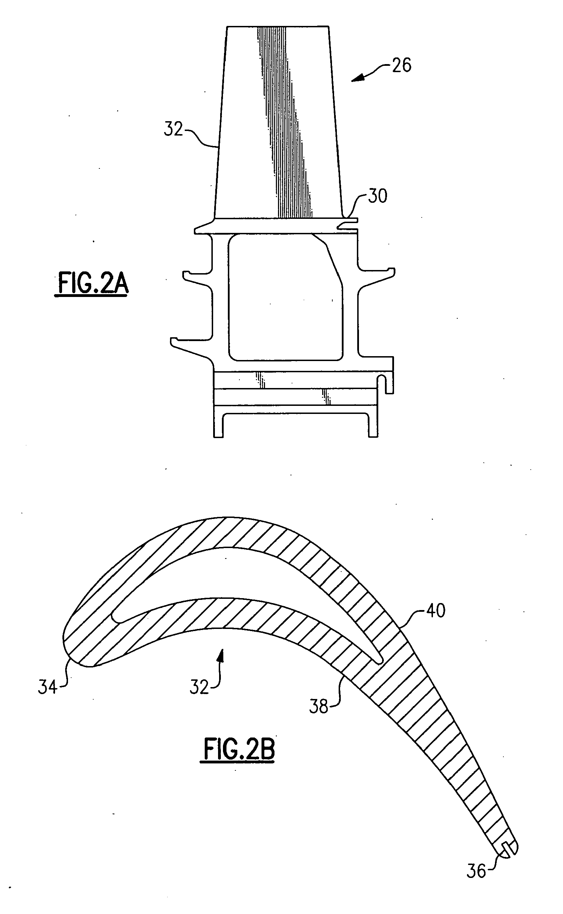

Figure 2A shows blade 26 having a platform 30. As is known, a curved airfoil 32 extends upwardly from the platform 30.

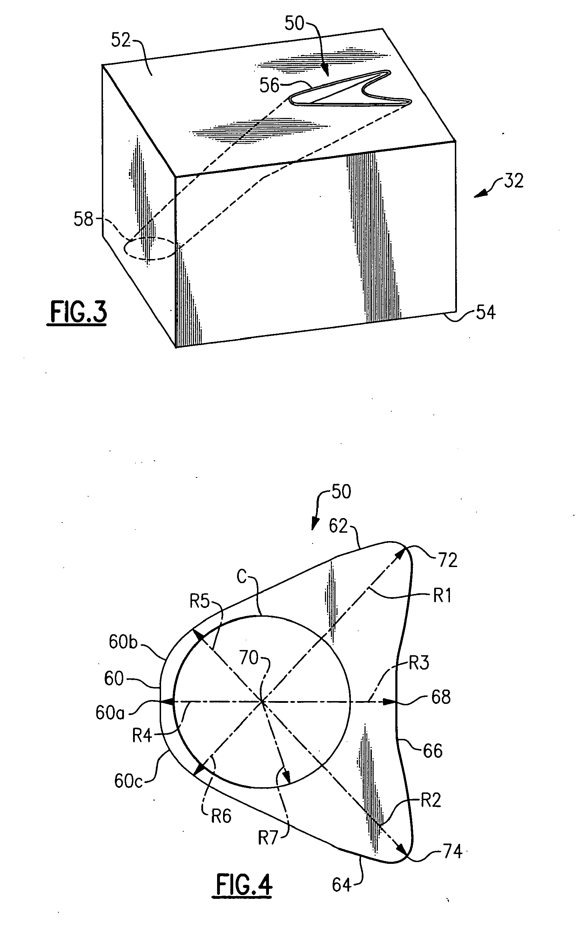

As shown in Figure 2B, the airfoil 32 has a leading edge 34 and a trailing edge 36. A pressure side 38 contacts a hotter fluid than a suction side 40. As shown in Figure 3, at least one cooling hole 50 is formed within the airfoil 32 to provide a cooling flow path through the airfoil 32. It should be understood that while only one cooling hole is shown, additional cooling holes are typically provided to provide cooling flow paths throughout the airfoil 32. Further, while the cooling hole is show in the example of a rotating turbine blade, it should be understood that the cooling hole could also be utilized in other gas turbine engine components such as static airfoils, vanes, etc., which are subjected to thermal stresses.

As shown in Figure 3, the airfoil 32 has an outer surface 52 and an inner surface 54 separated by a thickness. The cooling hole 50 extends through the thickness and has a first opening 56 at the outer surface 52 and a second opening 58 at the inner surface 54. In the example shown, the first opening 56 has a shape that is different than the second opening 58. The first opening 56 also has a larger cross-sectional area than the second opening 58.

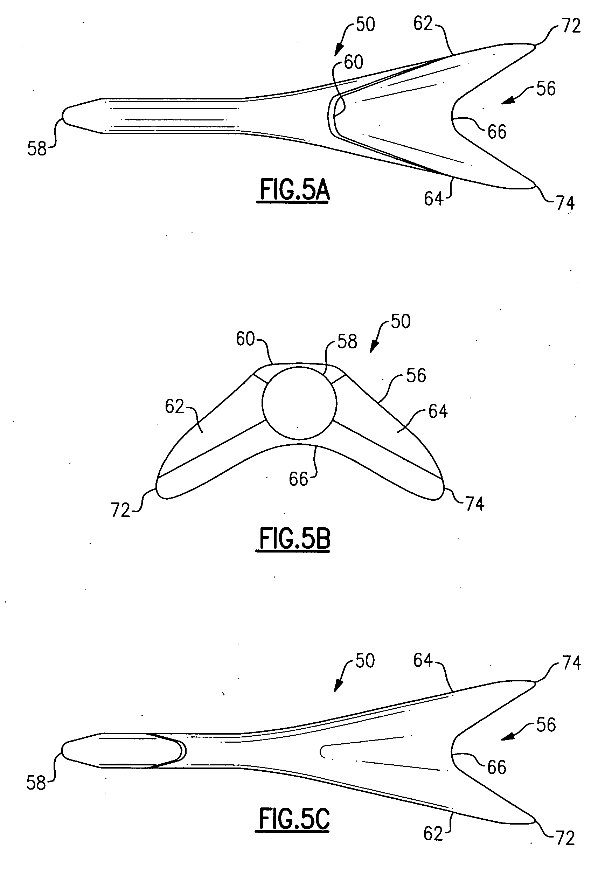

The first opening 56 has a bi-lobed shape that is shown in greater detail in Figures 4 and 5A-5C. This bi-lobed shape with the increased cross-sectional area improves cooling effectiveness. The bi-lobed shape is defined by a base portion 60, a first lobe 62 extending away from the base portion 60 in a first direction, and a second lobe 64 extending away from the base portion 60 in a second direction different than the first direction. The bi-lobed shape also includes an arcuate portion 66 that extends from each of the first 62 and second 64 lobes toward the base portion 60 to a center 68.

The base portion 60 has a first width and the first 62 and second 64 lobes extend away from each other to define a second width at distal tips that is larger than the first width. The lobes 62, 64 are formed such that the second width is orientated in a direction that is transverse to streamwise flow over the airfoil 32.

The first opening 56, which has the bi-lobed shape, is defined by a center of origin 70. The first lobe 62 is defined by a first radius R1 that extends from the center of origin 70 outwardly to a curved distal tip 72 and the second lobe 64 is defined by a second radius R2 that extends from the center of origin 70 to a curved distal tip 74. The center 68, which is a segment of the arcuate portion 66 that is closest to the center of origin 70, is defined by a third radius R3 that extends from the center of origin 70 to the center 68. The first R1 and second R2 radii are greater than the third radius R3.

The base portion 60 of the bi-lobed shape is defined by a first segment 60a, a second segment 60b on one side of the first segment 60a, and a third segment 60c on an opposite side of the first segment 60a. The first segment 60a is defined by a fourth radius R4 extending from the center of origin 70, the second segment 60b is defined by a fifth radius R5 extending from the center of origin 70, and the third segment 60c is defined by a sixth radius R6 extending from the center of origin 70. In the example shown, the first R1 and second R2 radii are greater than the fourth R4, fifth R5, and sixth R6 radii.

The cooling hole 50 transitions from the bi-lobed shape at the first opening 56 into a second shape that extends through the airfoil 32 to the second opening 58. The shape of the second opening 58 corresponds to this second shape. In the example shown, the second shape is circular. The circular shape portion of the cooling hole 50 is shown more clearly in Figures 5A-5C.

As shown more clearly in Figures 4 and 5B, the second shape comprises a circle C having a center that defines the center of origin 70. The circle is further defined by a seventh radius R7 that extends outwardly from the center of origin 70. In the example shown, this seventh radius R7 is less than radii R1-6.

The lengths of the various radii R1-7 can be varied to optimize cooling hole configurations for a specified gas turbine engine component. Each cooling hole 50 has a bi-lobed shape as described above, however, the dimensions of the various radii R1-7 can be adjusted as needed to provide more effective cooling for different types of components. As different gas turbine engine components have different flow characteristics depending upon an associated application, the dimensions of the cooling hole 50 can be optimized to size the cooling hole 50 for the best performance for the specified component.

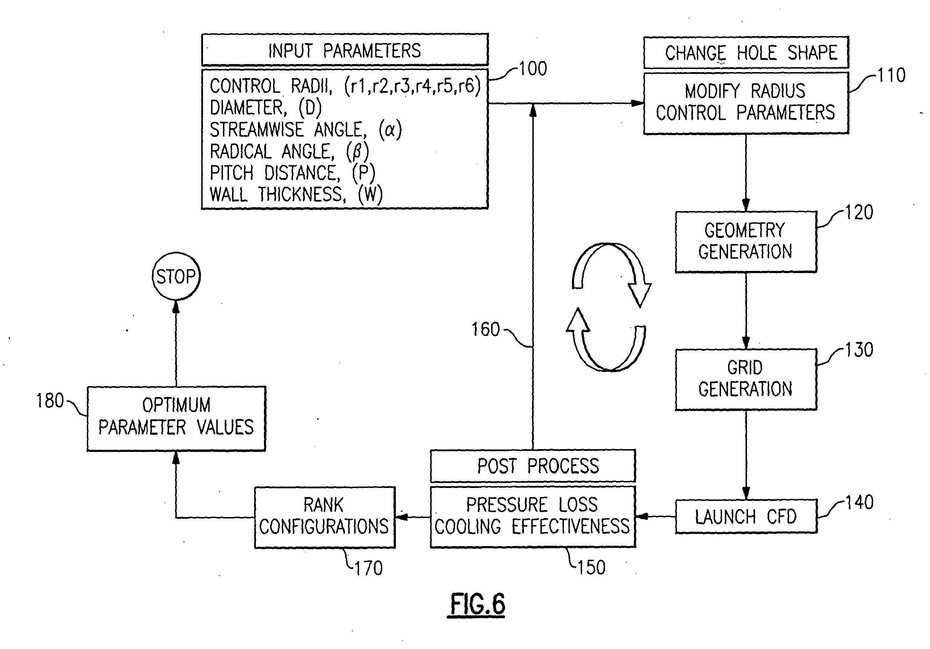

An example of the optimization process is shown in the flowchart of Figure 6. First a plurality of input parameters are defined as indicated at 100. These input parameters can include wall thickness W of the component, pitch distance P, radial (β and streamwise α angles that define orientation of the cooling hole, diameter D of the circular portion of the cooling hole, and control radii R1-6 that define the shape of the first opening 56. Typically, the control radii R1-6 and diameter of the circular portion of the cooling hole are variable input parameters, with the remaining parameters being fixed for a specified component. These input parameters provide a parametric hole shape model that allows the shape of the hole to have an arbitrary shape subject to certain manufacturing constraints. One example of the input parameters is as follows: diameter D = .020 inches (0.51 mm); streamwise angle α = 30°; radial angle β = 0°; pitch distance P = .100 inches (2.54 mm) and wall thickness W = .050 inches (1.27 mm).

Once the input parameters are defined, the control radii R1-6 values can be varied or modified as needed to generate an initial hole configuration, as indicated at 110. Once a first set of control radii R1-6 have been entered, a geometry generation step is performed as indicated at 120, and a grid generation step is performed as indicated at 130. The geometry and grid generations are well known processes and will not be discussed in detail. The result of these steps is a component model with a first proposed hole configuration.

Next, as indicated at 140, an automated computational fluid dynamics (CFD) process is launched to analyze the component with this specified hole configuration. Again, CFD processes are well known and will not be discussed in further detail. The results of the CFD processes are then analyzed at 150 to determine characteristics such as pressure loss and cooling effectiveness, for example. This post processing is integrated with the parametric hole shape set forth defined by steps 100 and 110, which assesses the advantages of each hole parameter setting. Based on the analysis, the control radii R1-6 can be adjusted or modified as indicated at 160 by returning to step 110. During this step, the hole parameters are iterated with a numerical optimization algorithm that searches for the best combination of parameter settings that maximize film coverage/effectiveness. Each modification to the control radii R1-6 results in a different hole configuration, which is separately analyzed. Each configuration is then ranked as indicated at 170 and an optimum configuration is identified at 180.

It should be understood that the above discussed method for shape optimization, and the corresponding use of the specified control radii, are just examples. The bi-lobe shape could be defined by fewer or more radii than that discussed above. Further, the optimization process that is shown in the flowchart of Figure 6 is just one example of a process for optimizing a shape; other processes could also be used.

The cooling holes 50 can be easily formed within an associated component by using rapid electrical discharge machining (EDM), laser cutting, or other similar high precision cutting processes. By using these types of methods, shaped holes can be formed within a component in a cost effective manner.

Further, the bi-lobed shape of the cooling holes provides significant improvement in film effectiveness compared to prior art hole configurations. The hole shape provides high coverage by flaring the hole to a large width (at the lobed portion) in the direction perpendicular to the streamwise flow. Then the area ratio across the hole is optimized to force uniform flow through the hole without separation, and to lay a highly effective film on the surface to be cooled without blow-off. This is accomplished by contracting the downstream side of the hole forward (Figure 3) to optimize the diffusion within the hole, resulting in the bi-lobed shape.

One benefit with this configuration is that the bi-lobe shape forces flow to more uniformly fill the hole. Additionally, the amount of material need to be removed to create the hole shape is reduced, which results in decreased costs.

The present invention thus presents a unique shape for a cooling hole that lowers stress concentrations, and improves the ability of the rotor blade to withstand thermal stresses.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A component (32) for a gas turbine engine comprising:
a component body having a first surface (52) separated from a second surface (54) by a thickness; and
at least one cooling hole (50) formed within said component body, said cooling hole (50) defining a first opening (56) to one of said first and second surfaces (52,54), said first opening (56) having a bi-lobed shape.

2. The component according to claim 1 wherein said cooling hole (50) defines a second opening (58) to the other of said first and second surfaces (52,54), said second opening (58) having a shape different than said bi-lobed shape.

3. The component according to claim 2 wherein said shape of said second opening (58) is circular.

4. The component according to claim 1, 2 or 3 wherein said first opening (56) has a center of origin (70) with said bi-lobed shape being defined by a first lobe (62) extending to a first distal tip (72) at a first radius (R1) extending from said center of origin (70), a second lobe (64) extending to a second distal tip (74) at a second radius (R2) extending from said center of origin (70), and an arcuate portion (66) curving inwardly from said first and second distal tips (72,74) toward a center portion (68) closest to said center origin (70), said center portion (68) being defined by a third radius (R3) extending from said center of origin (70), and wherein said first and said second radii (R1,R2) are greater than said third radius (R3).

5. The component according to claim 4 wherein said first opening (56) defines a first cross-sectional area for said bi-lobed shape and wherein said cooling hole (50) transitions into a second shape (58) having a second cross-sectional area less than said first cross-sectional area.

6. The component according to claim 5 wherein said second shape extends to a or the second opening (58) in the other of said first and second surfaces (52,54).

7. The component according to claim 5 or 6 wherein said second shape comprises a circle having a center point that defines said center of origin (70).

8. The component according to claim 7 wherein said bi-lobed shape is further defined by a base portion (60) from which said first and said second lobes (62,64) extend, said base portion (60) including a first segment (60a) defined by a fourth radius (R4) extending from said center of origin (70), a second segment (60b) on one side of said first segment (60a) defined by a fifth radius (R5) extending from said center of origin (70), and a third segment (60c) on an opposite side of said first segment (60a) defined by a sixth radius (R6) extending from said center of origin (70), and wherein said fourth, fifth, and sixth radii (R4,R5,R6) are less than said first and second radii (R1,R2).

9. The component according to claim 8 wherein said circle is defined by a seventh radius (R7) that is less than said first, said second, said third, said fourth, said fifth, and said sixth radii (R1,R6).

10. The component according to any preceding claim wherein said component body comprises an airfoil (32) having a curve with a leading edge (34) and a trailing edge (36).

11. The component according to claim 10 wherein said bi-lobed shape includes a base portion (60) having a first width and first and second lobes (62,64) that extend radially outwardly from said base portion (60), said first and said second lobes (62,64) extending away from each other to define a second width larger than said first width and that is orientated in a direction that is transverse to streamwise flow over said airfoil (32).

12. The component according to any preceding claim wherein said bi-lobed shape comprises a first lobe (62) of a first size and a second lobe (64) of a second size different than said first size.

13. The component according to any preceding claim wherein said first opening (56) has a center of origin (70) with said bi-lobed shape being defined by a plurality of radii that each extend from said center of origin (70).

14. A gas turbine engine comprising:
a fan (14);
a compressor (16);
a combustion section (18);
a turbine (20); and
an airfoil (32) associated with at least one of said fan (14), said compressor (16), said combustion section (18), and said turbine (20), said airfoil (32) having a curve with a leading edge (34) and a trailing edge (36), said airfoil including a first outer surface (52) and a second outer surface (54) separated from said first outer surface (52) by a thickness, and said airfoil including at least one cooling hole (50) formed within a body of said airfoil (32), said cooling hole (50) defining a first opening (56) to one of said first and second outer surfaces (52,54) and a second opening (58) to the other of said first and second outer surfaces (52,54), said first opening (56) having a bi-lobed shape.

15. The gas turbine engine according to claim 14 wherein said turbine (20) includes a plurality of blades (26), each blade (26) including a platform (30) with said airfoil (32) extending outwardly of said platform (30), said airfoil (32) having a pressure wall (38) and a suction wall (40) spaced from each other and connecting said leading and trailing edges (34,36).

16. The gas turbine engine according to claim 14 or 15 wherein said bi-lobed shape is defined by a center of origin (70) and a plurality of radii extending from said center of origin and includes at least a base portion (60), a first lobe (62) extending from said base portion (60) to a first distal tip (72), a second lobe (64) extending from said base portion (60) to a second distal tip (74), and an arcuate portion (66) curving inwardly from said first and second distal tips (72,74) toward said base portion (60), and wherein said first lobe (62) is defined by a first radius (R1) extending from said center of origin (70), said second lobe (64) is defined by a second radius (R2) extending from said center of origin (70), and said arcuate portion (66) extends inwardly from each of said first and said second lobes (72,74) toward a center region that is defined by a third radius (R3) extending from said center of origin (70), said first and said second radii (R1,R2) being greater than said third radius (R3).

17. A method for optimizing a shape of a cooling hole (50) in a component (32) for a gas turbine engine comprising:
(a) defining a plurality of fixed input parameters;
(b) defining at variable set of input parameters comprising a plurality of radii used to define a shape of the cooling hole;
(c) generating a model of the component that includes at least one cooling hole having a shape defined by the parameters set forth in steps (a)-(c);
(d) analyzing the model; and
(e) modifying the plurality of radii as needed to optimize the shape of the cooling hole based on the analysis of step (d).

18. The method according to claim 17 wherein the component includes a first outer surface (52) and a second outer surface (54) separated from the first outer surface (52) by a thickness, and including the steps of forming the cooling hole (50) to extend through a body of the component from the first outer surface (52) to the second outer surface (54), defining a first opening (56) of the cooling hole (50) to the first outer surface (52), and defining a second opening (58) to the second outer surface (54) where the first opening (56) has a bi-lobed shape.

19. The method according to claim 18 including the step of forming the second opening (58) to have a circular shape.

20. The method according to claim 18 or 19 wherein the component comprises an airfoil (32).
